# EUROPEAN PATENT APPLICATION

(11) **EP 4 498 647 A1**
(43) Date of publication of application: **29.01.2025**
(21) Application number: 22932553.5
(22) Date of filing: 21.03.2022
(51) Int. Cl.: H04L 27/06

(54) **INFORMATION REPORTING METHOD AND APPARATUS**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2022/082064
(87) International publication number: WO 2023/178484

(57) **Abstract**

Disclosed in embodiments of the present application are an information reporting method and apparatus. The method comprises: sending direct current subcarrier information to a network device, the direct current subcarrier information comprising the number of local oscillators of a terminal device as well as component carrier information and/or partial bandwidth information corresponding to each of at least one local oscillator, wherein the component carrier information and/or partial bandwidth information corresponding to each of the at least one local oscillator is used for determining an actual position of at least one direct current subcarrier of the terminal device. Therefore, the network device can determine the actual position of the direct current subcarrier of the terminal device according to information reported by the terminal device, the demodulation performance of the network device is effectively improved, the communication efficiency is improved, the signaling overhead is reduced, and the universality of the method is also improved.

## Description

### FIELD

The present disclosure relates to the field of communication technology, and more particularly to a method and apparatus for reporting information.

### BACKGROUND

In mobile communication technology, when a terminal device or a network device transmits a signal, due to a phase noise of a local oscillator, a large noise will be generated at the carrier frequency, which is usually called carrier leakage, causing signal distortion on a subcarrier where the local oscillator is located. This subcarrier is usually called direct current (DC) subcarrier. In an uplink, the network device needs to know a location of the DC subcarrier of the terminal device, so as to perform a compensation processing according to the location of the DC subcarrier to improve a demodulation performance of a base station.

In the related art, reporting txDirectCurrentLocation (sending a direct current location) is introduced for the terminal device. However, this reporting method is only suitable for a single carrier or when a number of local oscillators is equal to a number of component carriers (CCs), and the signaling overhead is large.

### SUMMARY

In a first aspect, embodiments of the present disclosure provide a method for reporting information, which is performed by a terminal device, and includes: sending direct current subcarrier information to a network device. The direct current subcarrier information includes: a number of local oscillators of the terminal device, and component carrier information and/or bandwidth part information corresponding to each of at least one local oscillator. The component carrier information and/or the bandwidth part information corresponding to each of the at least one local oscillator is used to determine an actual location of at least one direct current subcarrier of the terminal device.

Optionally, the direct current subcarrier information further includes: default location information of a direct current subcarrier corresponding to each of the at least one local oscillator.

Optionally, the method further includes: in response to an offset existing between an actual location and a default location of at least one direct current subcarrier, the direct current subcarrier information further including: offset information between the actual location and the default location of the direct current subcarrier.

Optionally, a default location of a direct current subcarrier corresponding to a local oscillator is at least one of: a mathematical center between a left edge of a first component carrier in at least one component carrier corresponding to the local oscillator and a right edge of a second component carrier in the at least one component carrier corresponding to the local oscillator; a mathematical center between a left edge of a first activated component carrier in at least one activated component carrier corresponding to the local oscillator and a right edge of a second activated component carrier in the at least one activated component carrier corresponding to the local oscillator; or a mathematical center between a left edge of a first activated bandwidth part in at least one activated bandwidth part corresponding to the local oscillator and a right edge of a second activated bandwidth part in the at least one activated bandwidth part corresponding to the local oscillator.

Optionally, the method further includes: in response to the local oscillator corresponding to one component carrier, the default location of the direct current subcarrier corresponding to the local oscillator being a mathematical center of the one component carrier; in response to the local oscillator corresponding to one activated component carrier, the default location of the direct current subcarrier corresponding to the local oscillator being a mathematical center of the one activated component carrier; in response to the local oscillator corresponding to one activated bandwidth part, the default location of the direct current subcarrier corresponding to the local oscillator being a mathematical center of the one activated bandwidth part.

Optionally, the number of local oscillators of the terminal device is carried in a dual power amplifier (PA)-architecture signaling or a predefined signaling.

Optionally, the default location information of the direct current subcarrier corresponding to each of the at least one local oscillator includes at least 2 bits.

Optionally, in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

In a second aspect, embodiments of the present disclosure provide a method for reporting information, which is performed by a network device, and includes: receiving direct current subcarrier information sent by a terminal device; and determining an actual location of at least one direct current subcarrier of the terminal device according to the direct current subcarrier information. The direct current subcarrier information includes: a number of local oscillators of the terminal device, and component carrier information and/or bandwidth part information corresponding to each of at least one local oscillator.

Optionally, the direct current subcarrier information further includes: default location information of a direct current subcarrier corresponding to each of the at least one local oscillator.

Optionally, the method further includes: in response to an offset existing between an actual location and a default location of at least one direct current subcarrier, the direct current subcarrier information further including: offset information between the actual location and the default location of the direct current subcarrier.

Optionally, a default location of a direct current subcarrier corresponding to a local oscillator is at least one of: a mathematical center between a left edge of a first component carrier in at least one component carrier corresponding to the local oscillator and a right edge of a second component carrier in the at least one component carrier corresponding to the local oscillator; a mathematical center between a left edge of a first activated component carrier in at least one activated component carrier corresponding to the local oscillator and a right edge of a second activated component carrier in the at least one activated component carrier corresponding to the local oscillator; or a mathematical center between a left edge of a first activated bandwidth part in at least one activated bandwidth part corresponding to the local oscillator and a right edge of a second activated bandwidth part in the at least one activated bandwidth part corresponding to the local oscillator.

Optionally, the method further includes: in response to the local oscillator corresponding to one component carrier, the default location of the direct current subcarrier corresponding to the local oscillator being a mathematical center of the one component carrier; in response to the local oscillator corresponding to one activated component carrier, the default location of the direct current subcarrier corresponding to the local oscillator being a mathematical center of the one activated component carrier; in response to the local oscillator corresponding to one activated bandwidth part, the default location of the direct current subcarrier corresponding to the local oscillator being a mathematical center of the one activated bandwidth part.

Optionally, the number of local oscillators of the terminal device is carried in a dual power amplifier (PA)-architecture signaling or a predefined signaling.

Optionally, the default location information of the direct current subcarrier corresponding to each of the at least one local oscillator includes at least 2 bits.

Optionally, in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

In a third aspect, embodiments of the present disclosure provide an apparatus for reporting information, which is applicable to a terminal device, and includes: a transceiver unit, configured to send direct current subcarrier information to a network device. The direct current subcarrier information includes: a number of local oscillators of the terminal device, and component carrier information and/or bandwidth part information corresponding to each of at least one local oscillator. The component carrier information and/or the bandwidth part information corresponding to each of the at least one local oscillator is used to determine an actual location of at least one direct current subcarrier of the terminal device.

Optionally, the direct current subcarrier information further includes: default location information of a direct current subcarrier corresponding to each of the at least one local oscillator.

Optionally, in response to an offset existing between an actual location and a default location of at least one direct current subcarrier, the direct current subcarrier information further includes: offset information between the actual location and the default location of the direct current subcarrier.

Optionally, a default location of a direct current subcarrier corresponding to a local oscillator is at least one of: a mathematical center between a left edge of a first component carrier in at least one component carrier corresponding to the local oscillator and a right edge of a second component carrier in the at least one component carrier corresponding to the local oscillator; a mathematical center between a left edge of a first activated component carrier in at least one activated component carrier corresponding to the local oscillator and a right edge of a second activated component carrier in the at least one activated component carrier corresponding to the local oscillator; or a mathematical center between a left edge of a first activated bandwidth part in at least one activated bandwidth part corresponding to the local oscillator and a right edge of a second activated bandwidth part in the at least one activated bandwidth part corresponding to the local oscillator.

Optionally, the apparatus further includes: in response to the local oscillator corresponding to one component carrier, the c of the direct current subcarrier corresponding to the local oscillator being a mathematical center of the one component carrier; in response to the local oscillator corresponding to one activated component carrier, the default location of the direct current subcarrier corresponding to the local oscillator being a mathematical center of the one activated component carrier; in response to the local oscillator corresponding to one activated bandwidth part, the default location of the direct current subcarrier corresponding to the local oscillator being a mathematical center of the one activated bandwidth part.

Optionally, the number of local oscillators of the terminal device is carried in a dual power amplifier (PA)-architecture signaling or a predefined signaling.

Optionally, the default location information of the direct current subcarrier corresponding to each of the at least one local oscillator includes at least 2 bits.

Optionally, in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

In a fourth aspect, embodiments of the present disclosure provide an apparatus for reporting information, which is applicable to a network device, and includes: a transceiver unit, configured to receive direct current subcarrier information sent by a terminal device; and a processing unit, configured to determine an actual location of at least one direct current subcarrier of the terminal device according to the direct current subcarrier information. The direct current subcarrier information includes: a number of local oscillators of the terminal device, and component carrier information and/or bandwidth part information corresponding to each of at least one local oscillator.

Optionally, the direct current subcarrier information further includes: default location information of a direct current subcarrier corresponding to each of the at least one local oscillator.

Optionally, in response to an offset existing between an actual location and a default location of at least one direct current subcarrier, the direct current subcarrier information further includes: offset information between the actual location and the default location of the direct current subcarrier.

Optionally, a default location of a direct current subcarrier corresponding to a local oscillator is at least one of: a mathematical center between a left edge of a first component carrier in at least one component carrier corresponding to the local oscillator and a right edge of a second component carrier in the at least one component carrier corresponding to the local oscillator; a mathematical center between a left edge of a first activated component carrier in at least one activated component carrier corresponding to the local oscillator and a right edge of a second activated component carrier in the at least one activated component carrier corresponding to the local oscillator; or a mathematical center between a left edge of a first activated bandwidth part in at least one activated bandwidth part corresponding to the local oscillator and a right edge of a second activated bandwidth part in the at least one activated bandwidth part corresponding to the local oscillator.

Optionally, the apparatus further includes: in response to the local oscillator corresponding to one component carrier, the default location of the direct current subcarrier corresponding to the local oscillator being a mathematical center of the one component carrier; in response to the local oscillator corresponding to one activated component carrier, the default location of the direct current subcarrier corresponding to the local oscillator being a mathematical center of the one activated component carrier; in response to the local oscillator corresponding to one activated bandwidth part, the default location of the direct current subcarrier corresponding to the local oscillator being a mathematical center of the one activated bandwidth part.

Optionally, the number of local oscillators of the terminal device is carried in a dual power amplifier (PA)-architecture signaling or a predefined signaling.

Optionally, the default location information of the direct current subcarrier corresponding to each of the at least one local oscillator includes at least 2 bits.

Optionally, in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

In a fifth aspect, embodiments of the present disclosure provide a communication apparatus, which includes: a processor; and a memory, having stored therein a computer program. The processor is configured to execute the computer program stored in the memory to cause the apparatus to perform the method for reporting information as described in embodiments of the first aspect.

In a sixth aspect, embodiments of the present disclosure provide a communication apparatus, which includes: a processor; and a memory, having stored therein a computer program. The processor is configured to execute the computer program stored in the memory to cause the apparatus to perform the method for reporting information as described in embodiments of the second aspect.

In a seventh aspect, embodiments of the present disclosure provide a communication apparatus, which includes: a processor; and an interface circuit, configured to receive a code instruction and transmit the code instruction to the processor. The processor is configured to run the code instruction to cause the apparatus to perform the method for reporting information as described in embodiments of the first aspect.

In an eighth aspect, embodiments of the present disclosure provide a communication apparatus, which includes: a processor; and an interface circuit, configured to receive a code instruction and transmit the code instruction to the processor. The processor is configured to run the code instruction to cause the apparatus to perform the method for reporting information as described in embodiments of the second aspect.

In a ninth aspect, embodiments of the present disclosure provide a computer-readable storage medium, having stored therein an instruction that, when executed, causes the method for reporting information as described in embodiments of the first aspect to be performed.

In a tenth aspect, embodiments of the present disclosure provide a computer-readable storage medium, having stored therein an instruction that, when executed, causes the method for reporting information as described in embodiments of the second aspect to be performed.

In an eleventh aspect, embodiments of the present disclosure provide a computer program that, when run on a computer, causes the computer to perform the method for reporting information as described in embodiments of the first aspect.

In a twelfth aspect, embodiments of the present disclosure provide a computer program that, when run on a computer, causes the computer to perform the method for reporting information as described in embodiments of the second aspect.

With the method and apparatus for reporting information according to embodiments of the present disclosure, the direct current subcarrier information is sent to the network device, the direct current subcarrier information includes: the number of local oscillators of the terminal device, and the component carrier information and/or the bandwidth part information corresponding to each of at least one local oscillator, and the component carrier information and/or the bandwidth part information corresponding to each of the at least one local oscillator is used to determine the actual location of at least one direct current subcarrier of the terminal device, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Additional aspects and advantages of present disclosure will be given in part in the following descriptions, become apparent in part from the following descriptions, or be learned from the practice of the embodiments of the present disclosure.

### BRIEF DESCRIPTION OF THE DRAWINGS

In order to clearly illustrate the technical solutions in embodiments of the present disclosure or in the related art, drawings to be used for the description of embodiments of the present disclosure or the related art are described below.
FIG. 1 is a schematic architecture diagram of a communication system according to embodiments of the present disclosure;
FIG. 2 is a schematic flowchart of a method for reporting information according to embodiments of the present disclosure;
FIG. 3 is a schematic flowchart of a method for reporting information according to embodiments of the present disclosure;
FIG. 4 is a schematic diagram showing a default location of a direct current subcarrier according to embodiments of the present disclosure;
FIG. 5 is a schematic diagram showing a default location of another direct current subcarrier according to embodiments of the present disclosure;
FIG. 6 is a schematic diagram showing a default location of another direct current subcarrier according to embodiments of the present disclosure;
FIG. 7 is a schematic flowchart of a method for reporting information according to embodiments of the present disclosure;
FIG. 8 is a schematic diagram showing an actual location of a direct current subcarrier according to embodiments of the present disclosure;
FIG. 9 is a schematic flowchart of a method for reporting information according to embodiments of the present disclosure;
FIG. 10 is a schematic flowchart of a method for reporting information according to embodiments of the present disclosure;
FIG. 11 is a schematic flowchart of a method for reporting information according to embodiments of the present disclosure;
FIG. 12 is a schematic block diagram of an apparatus for reporting information according to embodiments of the present disclosure;
FIG. 13 is a schematic block diagram of an apparatus for reporting information according to embodiments of the present disclosure;
FIG. 14 is a schematic block diagram of another apparatus for reporting information according to embodiments of the present disclosure; and
FIG. 15 is a schematic block diagram of a chip according to embodiments of the present disclosure.

### DETAILED DESCRIPTION

Reference will now be made in detail to illustrative embodiments of the present disclosure, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present disclosure. Instead, they are merely examples of apparatuses and methods consistent with some aspects of embodiments of the present disclosure as recited in the appended claims.

Terms used in embodiments of the present disclosure are only for the purpose of describing specific embodiments, but should not be construed to limit embodiments of the present disclosure. As used in embodiments of the present disclosure and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. Depending on the context, the term "if' as used herein may be construed to mean "when" or "upon" or "in response to determining".

Embodiments of the present disclosure will be described in detail below, examples of which are shown in the accompanying drawings, in which the same or similar numbers in different drawings represent the same or similar elements. The embodiments described below with reference to the accompanying drawings are illustrative, which are intended to explain the present disclosure, and shall not be construed to limit the present disclosure.

For better understanding of the method for reporting information according to embodiments of the present disclosure, a communication system to which embodiments of the present disclosure are applicable is described first below.

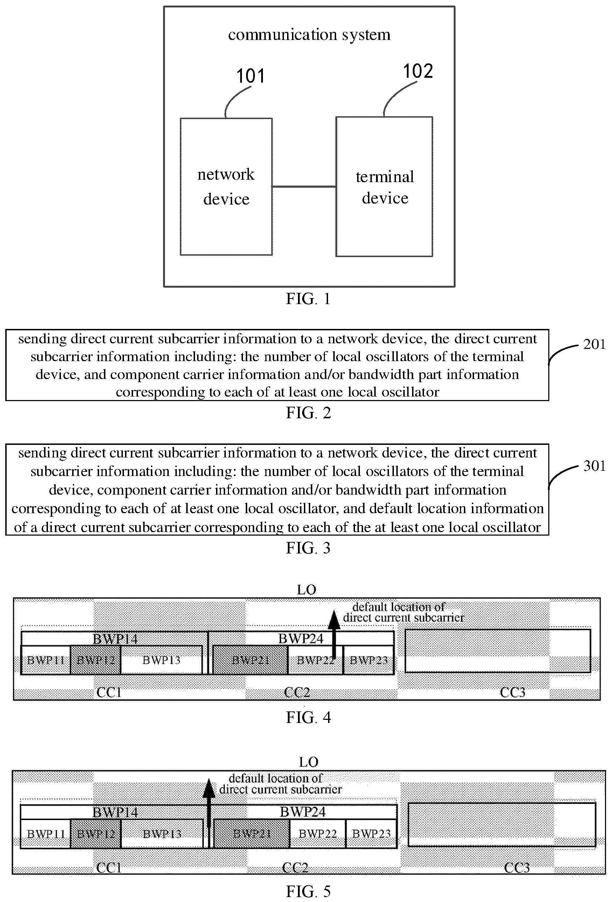

Referring to FIG. 1, FIG. 1 is a schematic architecture diagram of a communication system according to embodiments of the present disclosure. The communication system may include, but not limited to, a first network device, a second network device, and a terminal device. The number and forms of the devices shown in FIG. 1 are only used as an example, and do not constitute a limitation on embodiments of the present disclosure. In actual applications, two or more network devices and two or more terminal devices may be included. As an example for illustration, the communication system 10 shown in FIG. 1 includes one network device 101 and one terminal 102.

It should be noted that the technical solutions as set forth in embodiments of the present disclosure may be applied to various communication systems, for example, a long term evolution (LTE) system, a 5th generation (5G) mobile communication system, a 5G new radio (NR) system, or other new mobile communication systems in the future.

The network device 101 in embodiments of the present disclosure is an entity at a network side for sending or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present disclosure do not limit the specific technique and specific device form adopted by the network device. The network device according to embodiments of the present disclosure may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The terminal device 102 in embodiments of the present disclosure is an entity at a user side for receiving or sending signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present disclosure do not limit the specific technique and the specific device form adopted by the terminal device.

In mobile communication technology, when a terminal device or a network device transmits a signal, due to a phase noise of a local oscillator, a large noise will be generated at the carrier frequency, which is usually called carrier leakage, causing signal distortion on a subcarrier where the local oscillator (LO) is located. This subcarrier is usually called direct current (DC) subcarrier. In an uplink, the network device needs to know a location of the DC subcarrier of the terminal device, so as to perform a compensation processing according to the location of the DC subcarrier to improve a demodulation performance of a base station.

In the long term evolution (LTE) system, in order to avoid the impact of carrier leakage on the DC subcarrier, the terminal device is required to shift the DC subcarrier by 7.5 KHz in the baseband, thereby weakening the impact of the carrier leakage on the DC subcarrier. Moreover, because a bandwidth of the terminal device is consistent with a system bandwidth of the network device, the location of the DC subcarrier of the terminal is unique and known to the network device.

In the 5G (5th generation mobile communication technology) system, bandwidth parts (BWPs) are introduced, that is, a plurality of BWPs may be configured within a single carrier, resulting in that the bandwidth of the terminal device may be inconsistent with the system bandwidth of the network device, so the location of the DC carrier is unknown to the base station. Moreover, due to the introduction of the BWPs, DC subcarriers of various UEs are different, in order to simplify the demodulation complexity of a receiver, the terminal device does not need to shift the DC subcarrier by 7.5 KHz in the baseband. However, in order to improve the demodulation performance of network device, the network device still needs to know the location of the DC subcarrier of the terminal.

In the related art, reporting txDirectCurrentLocation (sending a direct current location) is introduced for the terminal device, and the terminal device sends the location of the DC subcarrier in each carrier to the network device. However, this reporting method is only applicable to the single carrier or when the number of local oscillators is equal to the number of component carriers (CCs), and the signaling overhead is large.

It can be understood that the communication system described in embodiments of the present disclosure is intended to illustrate the technical solutions as set forth in embodiments of the present disclosure more clearly, and does not constitute a limitation on the technical solutions as set forth in embodiments of the present disclosure. Those of ordinary skill in the art will know that with the evolution of the system architecture and the emergence of new service scenarios, the technical solutions as set forth in embodiments of the present disclosure are also applicable to similar technical problems.

The method and apparatus for reporting information provided by the present disclosure will be described in detail below with reference to the accompanying drawings.

Referring to FIG. 2, FIG. 2 is a schematic flowchart of a method for reporting information according to embodiments of the present disclosure. It should be noted that the method for reporting information as described in embodiments of the present disclosure is performed by a terminal device. As shown in FIG. 2, the method may include a following step.

In step 201, direct current subcarrier information is sent to a network device. The direct current subcarrier information includes: a number of local oscillators of the terminal device, and component carrier information and/or bandwidth part information corresponding to each of at least one local oscillator.

The component carrier information and/or the bandwidth part information corresponding to each of the at least one local oscillator is used to determine an actual location of at least one direct current subcarrier of the terminal device.

In embodiments of the present disclosure, the terminal device sends the direct current subcarrier information to the network device, and the network device is able to determine an actual location of at least one direct current subcarrier of the terminal device according to the direct current subcarrier information received.

In embodiments of the present disclosure, the direct current subcarrier information includes the number of local oscillators of the terminal device. The terminal device has at least one local oscillator, and as mentioned above, the signal on the subcarrier where the local oscillator is located will distort, so each local oscillator corresponds to one direct current subcarrier.

In embodiments of the present disclosure, the direct current subcarrier information also includes the component carrier information and/or the bandwidth part information corresponding to each of at least one local oscillator for determining the actual location of the at least one direct current subcarrier of the terminal device. One local oscillator may correspond to at least one component carrier. For example, a certain local oscillator LO1 corresponds to a component carrier CC1 and a component carrier CC2, and another local oscillator LO2 corresponds to a component carrier CC3.

As a first possible implementation, the direct current subcarrier information includes the component carrier information corresponding to each of the at least one local oscillator.

Optionally, the component carriers and the bandwidth parts may be encoded, and a local oscillator LO corresponding to a serial number of a component carrier is included in the direct current subcarrier information in a mapping manner and sent to the network device. For example, the local oscillator LO1 corresponds to the component carrier CC1 and the component carrier CC2, and the local oscillator LO2 corresponds to the component carrier CC3.

As a second possible implementation, the direct current subcarrier information includes the bandwidth part information corresponding to each of the at least one local oscillator.

Optionally, the component carriers and the bandwidth parts may be encoded, and a local oscillator LO corresponding to a serial number of a bandwidth part is included in the direct current subcarrier information in a mapping manner and sent to the network device. For example, the local oscillator LO1 corresponds to bandwidth parts BWP11, BWP12, BWP13, BWP14, BWP21, BWP22, BWP23 and BWP24, and the local oscillator LO2 corresponds to bandwidth parts BWP31, BWP32, BWP33 and BWP34.

Further, the bandwidth part information corresponding to each of the at least one local oscillator included in the direct current subcarrier information may be activated bandwidth part information. For example, an activated bandwidth part in the component carrier CC1 is BWP11, an activated bandwidth part in the component carrier CC2 is BWP22, an activated bandwidth part in the component carrier CC3 is BWP31, and the direct current subcarrier information includes the bandwidth parts BWP11 and BWP22 corresponding to the local oscillator LO1 and the bandwidth part BWP31 corresponding to the local oscillator L02.

As a third possible implementation, the direct current subcarrier information includes the component carrier information and the bandwidth part information corresponding to each of the at least one local oscillator.

Optionally, the component carriers and the bandwidth parts may be encoded, and a local oscillator LO corresponding to a serial number of a component carrier and a serial number of a bandwidth part is included in the direct current subcarrier information in a mapping manner and sent to the network device. For example, the local oscillator LO 1 corresponds to the component carrier CC1 and the component carrier CC2, as well as the bandwidth parts BWP11, BWP12, BWP13, BWP14, BWP21, BWP22, BWP23 and BWP24; and the local oscillator LO2 corresponds to the component carrier CC3 and bandwidth parts BWP31, BWP32, BWP33 and BWP34.

Further, the bandwidth part information corresponding to each of the at least one local oscillator included in the direct current subcarrier information may be activated bandwidth part information. For example, an activated bandwidth part in the component carrier CC1 is BWP11, an activated bandwidth part in the component carrier CC2 is BWP22, an activated bandwidth part in the component carrier CC3 is BWP31, and the direct current subcarrier information includes the component carrier CC1, the component carrier CC2 and the bandwidth parts BWP11 and BWP22 corresponding to the local oscillator LO1, as well as the component carrier CC3 and the bandwidth part BWP31 corresponding to the local oscillator LO2.

In embodiments of the present disclosure, the network device can determine the actual location of the direct current subcarrier according to the received component carrier information and/or bandwidth part information corresponding to each local oscillator.

In some embodiments, the terminal device sends default location information of a direct current subcarrier corresponding to each of the at least one local oscillator to the network device. The default location information may also be included in the direct current subcarrier information to indicate a default location of the direct current subcarrier corresponding to each local oscillator. It can be understood that the direct current subcarrier corresponding to each local oscillator has corresponding default location information, that is, two local oscillators will correspond to two default location information of two direct current subcarriers.

Optionally, for any local oscillator, the default location of the direct current subcarrier corresponding to the local oscillator may be one of:
a mathematical center between a left edge of a first component carrier in at least one component carrier corresponding to the local oscillator and a right edge of a second component carrier in the at least one component carrier corresponding to the local oscillator; where the first component carrier refers to a leftmost component carrier in the at least one component carrier corresponding to the local oscillator in a frequency domain, and the second component carrier refers to a rightmost component carrier in the at least one component carrier corresponding to the local oscillator in the frequency domain;
a mathematical center between a left edge of a first activated component carrier in at least one activated component carrier corresponding to the local oscillator and a right edge of a second activated component carrier in the at least one activated component carrier corresponding to the local oscillator; where the first activated component carrier refers to a leftmost activated component carrier in the at least one activated component carrier corresponding to the local oscillator in the frequency domain, and the second activated component carrier refers to a rightmost activated component carrier in the at least one activated component carrier corresponding to the local oscillator in the frequency domain; or
a mathematical center between a left edge of a first activated bandwidth part in at least one activated bandwidth part corresponding to the local oscillator and a right edge of a second activated bandwidth part in the at least one activated bandwidth part corresponding to the local oscillator; where the first activated bandwidth part refers to a leftmost activated bandwidth part in the at least one activated bandwidth part corresponding to the local oscillator in the frequency domain, and the second activated bandwidth part refers to a rightmost activated bandwidth part in the at least one activated bandwidth part corresponding to the local oscillator in the frequency domain.

Further, in response to the local oscillator corresponding to one component carrier, the default location of the direct current subcarrier corresponding to the local oscillator is a mathematical center of the one component carrier; in response to the local oscillator corresponding to one activated component carrier, the default location of the direct current subcarrier corresponding to the local oscillator is a mathematical center of the one activated component carrier; in response to the local oscillator corresponding to one activated bandwidth part, the default location of the direct current subcarrier corresponding to the local oscillator is a mathematical center of the one activated bandwidth part.

In some embodiments, in response to an offset existing between the actual location and the default location of the direct current subcarrier, the terminal device also sends offset information between the actual location and the default location to the network device, and the offset information may also be included in the direct current subcarrier information.

In some embodiments, the number of local oscillators of the terminal device may be carried in a dual power amplifier (PA)-architecture signaling or a predefined signaling, and sent to the network device.

It can be understood that the method for reporting information as set forth in embodiments of the present disclosure is not only applicable to uplink multi-carrier aggregation, but also applicable to other communication systems, such as dual connectivity (DC) system.

In summary, the direct current subcarrier information is sent to the network device, the direct current subcarrier information includes: the number of local oscillators of the terminal device, and the component carrier information and/or the bandwidth part information corresponding to each of at least one local oscillator, and the component carrier information and/or the bandwidth part information corresponding to each of the at least one local oscillator is used to determine the actual location of the at least one direct current subcarrier of the terminal device, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Referring to FIG. 3, FIG. 3 is a schematic flowchart of a method for reporting information according to embodiments of the present disclosure. It should be noted that the method for reporting information in embodiments of the present disclosure is performed by the terminal device. As shown in FIG. 3, the method may include a following step.

In step 301, direct current subcarrier information is sent to a network device. The direct current subcarrier information includes: a number of local oscillators of the terminal device, component carrier information and/or bandwidth part information corresponding to each of at least one local oscillator, and default location information of a direct current subcarrier corresponding to each of the at least one local oscillator.

The default location information of the direct current subcarrier corresponding to the local oscillator indicates a default location of the direct current subcarrier.

As a first possible implementation, a default location of a direct current subcarrier corresponding to a certain local oscillator is a mathematical center between a left edge of a first component carrier in at least one component carrier corresponding to the local oscillator and a right edge of a second component carrier in the at least one component carrier corresponding to the local oscillator.

The first component carrier refers to a leftmost component carrier in the at least one component carrier corresponding to the local oscillator in a frequency domain, and the second component carrier refers to a rightmost component carrier in the at least one component carrier corresponding to the local oscillator in the frequency domain.

For example, referring to FIG. 4, which is a schematic diagram showing a default location of a direct current subcarrier according to embodiments of the present disclosure, the local oscillator LO corresponds to three component carriers CC1, CC2 and CC3. The default location of the direct current subcarrier corresponding to the local oscillator is the mathematical center between the left edge of the first component carrier in the at least one component carrier corresponding to the local oscillator and the right edge of the second component carrier in the at least one component carrier corresponding to the local oscillator, i.e., the mathematical center between the left edge of CC1 and the right edge of CC3, as shown in FIG. 4.

It can be understood that, further, if the local oscillator only corresponds to one component carrier, the default location of the direct current subcarrier corresponding to the local oscillator is a mathematical center of the one component carrier.

In embodiments of the present disclosure, if default location information of a direct current subcarrier corresponding to a certain local oscillator indicates that the default location of the direct current subcarrier is the mathematical center between the left edge of the first component carrier in the at least one component carrier corresponding to the local oscillator and the right edge of the second component carrier in the at least one component carrier corresponding to the local oscillator, the terminal device may send the component carrier information and the bandwidth part information corresponding to the local oscillator to the network device, or only send the component carrier information corresponding to the local oscillator to further reduce the signaling overhead.

As a second possible implementation, a default location of a direct current subcarrier corresponding to a certain local oscillator is a mathematical center between a left edge of a first activated component carrier in at least one activated component carrier corresponding to the local oscillator and a right edge of a second activated component carrier in the at least one activated component carrier corresponding to the local oscillator.

The first activated component carrier refers to a leftmost activated component carrier in the at least one activated component carrier corresponding to the local oscillator in the frequency domain, and the second activated component carrier refers to a rightmost activated component carrier in the at least one activated component carrier corresponding to the local oscillator in the frequency domain.

For example, referring to FIG. 5, which is a schematic diagram showing a default location of another direct current subcarrier according to embodiments of the present disclosure, the local oscillator LO corresponds to three component carriers CC1, CC2 and CC3, in which the component carriers CC1 and CC2 are activated component carriers. The default location of the direct current subcarrier corresponding to the local oscillator is the mathematical center between the left edge of the first activated component carrier in the at least one activated component carrier corresponding to the local oscillator and the right edge of the second activated component carrier in the at least one activated component carrier corresponding to the local oscillator, i.e., the mathematical center between the left edge of CC 1 and the right edge of CC2, as shown in FIG. 5.

It can be understood that, further, if the local oscillator only corresponds to one activated component carrier, the default location of the direct current subcarrier corresponding to the local oscillator is a mathematical center of the one activated component carrier.

In embodiments of the present disclosure, if default location information of a direct current subcarrier corresponding to a certain local oscillator indicates that the default location of the direct current subcarrier is the mathematical center between the left edge of the first activated component carrier in the at least one activated component carrier corresponding to the local oscillator and the right edge of the second activated component carrier in the at least one activated component carrier corresponding to the local oscillator, the terminal device may send the component carrier information and the bandwidth part information corresponding to the local oscillator to the network device, or only send the component carrier information corresponding to the local oscillator to further reduce the signaling overhead.

As a third possible implementation, a default location of a direct current subcarrier corresponding to a certain local oscillator is a mathematical center between a left edge of a first activated bandwidth part in at least one activated bandwidth part corresponding to the local oscillator and a right edge of a second activated bandwidth part in the at least one activated bandwidth part corresponding to the local oscillator.

The first activated bandwidth part refers to a leftmost activated bandwidth part in the at least one activated bandwidth part corresponding to the local oscillator in the frequency domain, and the second activated bandwidth part refers to a rightmost activated bandwidth part in the at least one activated bandwidth part corresponding to the local oscillator in the frequency domain.

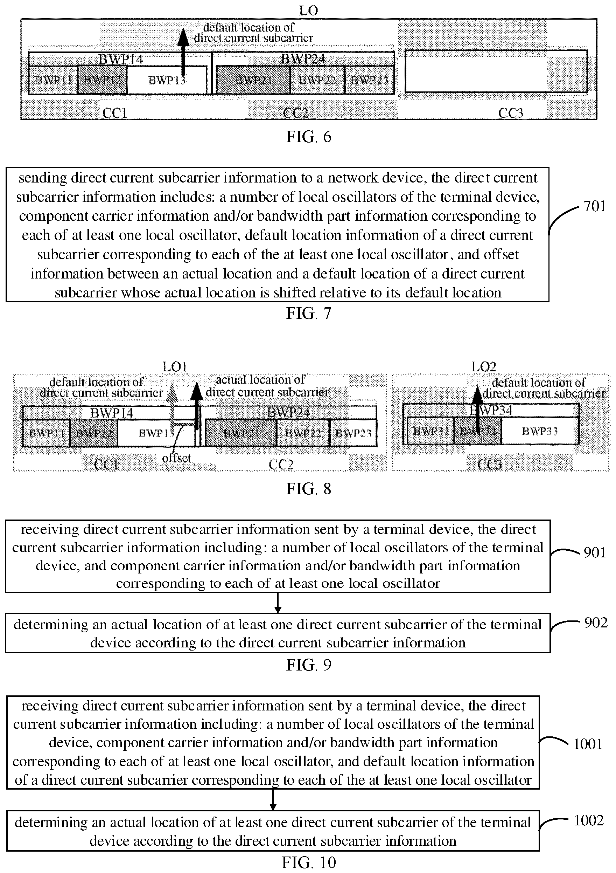

For example, referring to FIG. 6, which is a schematic diagram showing a default location of another direct current subcarrier according to embodiments of the present disclosure, the local oscillator LO corresponds to three component carriers CC1, CC2 and CC3, in which the component carriers CC1 and CC2 are activated bandwidth parts, an activated bandwidth part in CC1 is BWP12, and an activated bandwidth part in CC2 is BWP21. The default location of the direct current subcarrier corresponding to the local oscillator is the mathematical center between the left edge of the first activated bandwidth part in the at least one activated bandwidth part corresponding to the local oscillator and the right edge of the second activated bandwidth part in the at least one activated bandwidth part corresponding to the local oscillator, i.e., the mathematical center between the left edge of BWP12 and the right edge of BWP21, as shown in FIG. 6.

It can be understood that, further, if the local oscillator only corresponds to one activated bandwidth part, the default location of the direct current subcarrier corresponding to the local oscillator is a mathematical center of the one activated bandwidth part.

In embodiments of the present disclosure, if default location information of a direct current subcarrier corresponding to a certain local oscillator indicates that the default location of the direct current subcarrier is the mathematical center between the left edge of the first activated bandwidth part in the at least one activated bandwidth part corresponding to the local oscillator and the right edge of the second activated bandwidth part in the at least one activated bandwidth part corresponding to the local oscillator, the terminal device may send the component carrier information and the bandwidth part information corresponding to the local oscillator to the network device, or only send the bandwidth part information corresponding to the local oscillator to further reduce the signaling overhead. In embodiments of the present disclosure, the bandwidth part information is activated bandwidth part information. That is, for the example shown in FIG. 6, the terminal device may send the component carriers CC1, CC2 and CC3 and the bandwidth part information BWP12 and BWP21 corresponding to the local oscillator LO to the network device, or only send the bandwidth part information BWP12 and BWP21 corresponding to the local oscillator LO to further reduce the signaling overhead.

In embodiments of the present disclosure, optionally, the default location information of the direct current subcarrier corresponding to the local oscillator may be reported via information of at least 2 bits. For example, a value of the default location information is 1 to indicate that the default location of the direct current subcarrier is the default location as described in the first possible implementation; the value of the default location information is 2 to indicate that the default location of the direct current subcarrier is the default location as described in the second possible implementation; and the value of the default location information is 3 to indicate that the default location of the direct current subcarrier is the default location as described in the third possible implementation, and so on.

In embodiments of the present disclosure, the default location information of the direct current subcarriers corresponding to various local oscillators may be the same or different.

In some embodiments, the component carriers and the bandwidth parts may be encoded, and a local oscillator LO corresponding to a serial number of a component carrier and a serial number of a bandwidth part is included in the direct current subcarrier information in a mapping manner and sent to the network device.

If the terminal device only sends the component carrier information or the bandwidth part information corresponding to the local oscillator, similarly, the local oscillator LO corresponding to the serial number of the component carrier or the serial number of the bandwidth part is included in the direct current subcarrier information in a mapping manner and sent to the network device.

In embodiments of the present disclosure, the network device can determine the actual location of the at least one direct current subcarrier of the terminal device according to the component carrier information and/or the bandwidth part information corresponding to each of the at least one local oscillator as well as the default location information of the direct current subcarrier corresponding to each of the at least one local oscillator sent by the terminal device.

It can be understood that the method for reporting information as set forth in embodiments of the present disclosure is not only applicable to uplink multi-carrier aggregation, but also applicable to other communication systems, such as dual connectivity (DC) system.

In summary, the direct current subcarrier information is sent to the network device, the direct current subcarrier information includes: the number of local oscillators of the terminal device, the component carrier information and/or the bandwidth part information corresponding to each of at least one local oscillator, and the default location information of the direct current subcarrier corresponding to each of the at least one local oscillator, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Referring to FIG. 7, FIG. 7 is a schematic flowchart of a method for reporting information according to embodiments of the present disclosure. It should be noted that the method for reporting information in embodiments of the present disclosure is performed by the terminal device. As shown in FIG. 7, the method may include a following step.

In step 701, direct current subcarrier information is sent to a network device. The direct current subcarrier information includes: a number of local oscillators of the terminal device, component carrier information and/or bandwidth part information corresponding to each of at least one local oscillator, default location information of a direct current subcarrier corresponding to each of the at least one local oscillator, and offset information between an actual location and a default location of a direct current subcarrier whose actual location is shifted relative to its default location. That is, in embodiments of the present disclosure.

The default location information of the direct current subcarrier corresponding to the local oscillator indicates a default location of the direct current subcarrier.

As a first possible implementation, a default location of a direct current subcarrier corresponding to a certain local oscillator is a mathematical center between a left edge of a first component carrier in at least one component carrier corresponding to the local oscillator and a right edge of a second component carrier in the at least one component carrier corresponding to the local oscillator.

The first component carrier refers to a leftmost component carrier in the at least one component carrier corresponding to the local oscillator in a frequency domain, and the second component carrier refers to a rightmost component carrier in the at least one component carrier corresponding to the local oscillator in the frequency domain.

It can be understood that, further, if the local oscillator only corresponds to one component carrier, the default location of the direct current subcarrier corresponding to the local oscillator is a mathematical center of the one component carrier.

In embodiments of the present disclosure, if default location information of a direct current subcarrier corresponding to a certain local oscillator indicates that the default location of the direct current subcarrier is the mathematical center between the left edge of the first component carrier in the at least one component carrier corresponding to the local oscillator and the right edge of the second component carrier in the at least one component carrier corresponding to the local oscillator, the terminal device may send the component carrier information and the bandwidth part information corresponding to the local oscillator to the network device, or only send the component carrier information corresponding to the local oscillator to further reduce the signaling overhead.

As a second possible implementation, a default location of a direct current subcarrier corresponding to a certain local oscillator is a mathematical center between a left edge of a first activated component carrier in at least one activated component carrier corresponding to the local oscillator and a right edge of a second activated component carrier in the at least one activated component carrier corresponding to the local oscillator.

The first activated component carrier refers to a leftmost activated component carrier in the at least one activated component carrier corresponding to the local oscillator in the frequency domain, and the second activated component carrier refers to a rightmost activated component carrier in the at least one activated component carrier corresponding to the local oscillator in the frequency domain.

It can be understood that, further, if the local oscillator only corresponds to one activated component carrier, the default location of the direct current subcarrier corresponding to the local oscillator is a mathematical center of the one activated component carrier.

In embodiments of the present disclosure, if default location information of a direct current subcarrier corresponding to a certain local oscillator indicates that the default location of the direct current subcarrier is the mathematical center between the left edge of the first activated component carrier in the at least one activated component carrier corresponding to the local oscillator and the right edge of the second activated component carrier in the at least one activated component carrier corresponding to the local oscillator, the terminal device may send the component carrier information and the bandwidth part information corresponding to the local oscillator to the network device, or only send the component carrier information corresponding to the local oscillator to further reduce the signaling overhead.

As a third possible implementation, a default location of a direct current subcarrier corresponding to a certain local oscillator is a mathematical center between a left edge of a first activated bandwidth part in at least one activated bandwidth part corresponding to the local oscillator and a right edge of a second activated bandwidth part in the at least one activated bandwidth part corresponding to the local oscillator.

The first activated bandwidth part refers to a leftmost activated bandwidth part in the at least one activated bandwidth part corresponding to the local oscillator in the frequency domain, and the second activated bandwidth part refers to a rightmost activated bandwidth part in the at least one activated bandwidth part corresponding to the local oscillator in the frequency domain.

It can be understood that, further, if the local oscillator only corresponds to one activated bandwidth part, the default location of the direct current subcarrier corresponding to the local oscillator is a mathematical center of the one activated bandwidth part.

In embodiments of the present disclosure, if default location information of a direct current subcarrier corresponding to a certain local oscillator indicates that the default location of the direct current subcarrier is the mathematical center between the left edge of the first activated bandwidth part in the at least one activated bandwidth part corresponding to the local oscillator and the right edge of the second activated bandwidth part in the at least one activated bandwidth part corresponding to the local oscillator, the terminal device may send the component carrier information and the bandwidth part information corresponding to the local oscillator to the network device, or only send the bandwidth part information corresponding to the local oscillator to further reduce the signaling overhead. In embodiments of the present disclosure, the bandwidth part information is activated bandwidth part information. That is, for the example shown in FIG. 6, the terminal device may send the component carriers CC1, CC2 and CC3 and the bandwidth part information BWP12 and BWP21 corresponding to the local oscillator LO to the network device, or only send the bandwidth part information BWP12 and BWP21 corresponding to the local oscillator LO to further reduce the signaling overhead.

In embodiments of the present disclosure, optionally, the default location information of the direct current subcarrier corresponding to the local oscillator may be reported via information of at least 2 bits. For example, a value of the default location information is 1 to indicate that the default location of the direct current subcarrier is the default location as described in the first possible implementation; the value of the default location information is 2 to indicate that the default location of the direct current subcarrier is the default location as described in the second possible implementation; and the value of the default location information is 3 to indicate that the default location of the direct current subcarrier is the default location as described in the third possible implementation, and so on.

In embodiments of the present disclosure, the direct current subcarrier information also includes offset information between an actual location and a default location of a direct current subcarrier whose actual location is shifted relative to its default location. That is, in embodiments of the present disclosure, there exists at least one local oscillator, for each of these local oscillator, the actual location of the respective direct current subcarrier corresponding the local oscillator is shifted relative to its default location, and the terminal device also sends the offset information between the actual location and the default location of the direct current subcarrier to the network device.

As an example, referring to FIG. 8, which is a schematic diagram showing an actual location of a direct current subcarrier according to embodiments of the present disclosure, local oscillator LO1 corresponds to component carriers CC1 and CC2, local oscillator LO2 corresponds to component carrier CC3, the activated bandwidth part in the component carrier CC1 is BWP12, the activated bandwidth part in the component carrier CC2 is BWP21, and the activated bandwidth part in the component carrier CC3 is BWP32. In this example, the default location of the direct current subcarrier corresponding to each local oscillator of the terminal device is the geometry of the left edge of the first activated bandwidth part in the at least one activated bandwidth part corresponding to the local oscillator and the right edge of the second activated bandwidth part in the at least one activated bandwidth part corresponding to the local oscillator. That is, the default location of the direct current subcarrier corresponding to the local oscillator LO1 is the mathematical center of the left edge of BWP12 and the right edge of BWP21, and the default location of the direct current subcarrier corresponding to the local oscillator LO2 is the mathematical center of BWP32, as shown in FIG. 8. At this time, the actual location of the direct current subcarrier corresponding to the local oscillator LO1 is shifted relative to the default location, with a shifted amount recorded as offset. Therefore, the direct current subcarrier information also includes the offset information between the actual location and the default location of the direct current subcarrier corresponding to the local oscillator LO1.

It can be understood that if the actual location of the direct current subcarrier corresponding to the local oscillator LO2 is not at the mathematical center of BWP32, the direct current subcarrier information of the terminal device also includes the offset information between the actual location and the default location of the direct current subcarrier corresponding to the local oscillator LO2.

It can be understood that the method for reporting information as set forth in embodiments of the present disclosure is not only applicable to uplink multi-carrier aggregation, but also applicable to other communication systems, such as dual connectivity (DC) system.

In summary, the direct current subcarrier information is sent to the network device, the direct current subcarrier information includes: the number of local oscillators of the terminal device, the component carrier information and/or the bandwidth part information corresponding to each of at least one local oscillator, the default location information of the direct current subcarrier corresponding to each of the at least one local oscillator, and the offset information between the actual location and the default location of the direct current subcarrier whose actual location is shifted relative to its default location, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Referring to FIG. 9, FIG. 9 is a schematic flowchart of a method for reporting information according to embodiments of the present disclosure. It should be noted that the method for reporting information as described in embodiments of the present disclosure is performed by a network device. As shown in FIG. 9, the method may include the following steps.

In step 901, direct current subcarrier information sent by a terminal device is received. The direct current subcarrier information includes: a number of local oscillators of the terminal device, and component carrier information and/or bandwidth part information corresponding to each of at least one local oscillator.

In embodiments of the present disclosure, the network device receives the direct current subcarrier information sent by the terminal device, and the network device is able to determine an actual location of at least one direct current subcarrier of the terminal device according to the direct current subcarrier information received.

In embodiments of the present disclosure, the direct current subcarrier information includes the number of local oscillators of the terminal device. The terminal device has at least one local oscillator, and as mentioned above, the signal on the subcarrier where the local oscillator is located will distort, so each local oscillator corresponds to one direct current subcarrier.

In embodiments of the present disclosure, the direct current subcarrier information also includes the component carrier information and/or the bandwidth part information corresponding to each of the at least one local oscillator for determining the actual location of the at least one direct current subcarrier of the terminal device. One local oscillator may correspond to at least one component carrier. For example, a certain local oscillator LO1 corresponds to a component carrier CC1 and a component carrier CC2, and another local oscillator LO2 corresponds to a component carrier CC3.

As a first possible implementation, the direct current subcarrier information includes the component carrier information corresponding to each of the at least one local oscillator.

Optionally, the component carriers and the bandwidth parts may be encoded, and a local oscillator LO corresponding to a serial number of a component carrier is included in the direct current subcarrier information in a mapping manner and sent to the network device. For example, the local oscillator LO1 corresponds to the component carrier CC1 and the component carrier CC2, and the local oscillator LO2 corresponds to the component carrier CC3.

As a second possible implementation, the direct current subcarrier information includes the bandwidth part information corresponding to each of the at least one local oscillator.

Optionally, the component carriers and the bandwidth parts may be encoded, and a local oscillator LO corresponding to a serial number of a bandwidth part is included in the direct current subcarrier information in a mapping manner and sent to the network device. For example, the local oscillator LO1 corresponds to bandwidth parts BWP11, BWP12, BWP13, BWP14, BWP21, BWP22, BWP23 and BWP24, and the local oscillator LO2 corresponds to bandwidth parts BWP31, BWP32, BWP33 and BWP34.

Further, the bandwidth part information corresponding to each of the at least one local oscillator included in the direct current subcarrier information may be activated bandwidth part information. For example, an activated bandwidth part in the component carrier CC1 is BWP11, an activated bandwidth part in the component carrier CC2 is BWP22, an activated bandwidth part in the component carrier CC3 is BWP31, and the direct current subcarrier information includes the bandwidth parts BWP 11 and BWP22 corresponding to the local oscillator LO1 and the bandwidth part BWP31 corresponding to the local oscillator LO2.

As a third possible implementation, the direct current subcarrier information includes the component carrier information and the bandwidth part information corresponding to each of the at least one local oscillator.

Optionally, the component carriers and the bandwidth parts may be encoded, and a local oscillator LO corresponding to a serial number of a component carrier and a serial number of a bandwidth part is included in the direct current subcarrier information in a mapping manner and sent to the network device. For example, the local oscillator LO 1 corresponds to the component carrier CC 1 and the component carrier CC2, as well as the bandwidth parts BWP11, BWP12, BWP13, BWP14, BWP21, BWP22, BWP23 and BWP24; and the local oscillator LO2 corresponds to the component carrier CC3 and bandwidth parts BWP31, BWP32, BWP33 and BWP34.

Further, the bandwidth part information corresponding to each of the at least one local oscillator included in the direct current subcarrier information may be activated bandwidth part information. For example, an activated bandwidth part in the component carrier CC1 is BWP11, an activated bandwidth part in the component carrier CC2 is BWP22, an activated bandwidth part in the component carrier CC3 is BWP31, and the direct current subcarrier information includes the component carrier CC1, the component carrier CC2 and the bandwidth parts BWP11 and BWP22 corresponding to the local oscillator LO1, as well as the component carrier CC3 and the bandwidth part BWP31 corresponding to the local oscillator LO2.

In some embodiments, the network device receives default location information of a direct current subcarrier corresponding to each of the at least one local oscillator sent by the terminal device. The default location information may also be included in the direct current subcarrier information to indicate a default location of the direct current subcarrier corresponding to each local oscillator. It can be understood that the direct current subcarrier corresponding to each local oscillator has corresponding default location information, that is, two local oscillators will correspond to two default location information of two direct current subcarriers.

Optionally, for any local oscillator, the default location of the direct current subcarrier corresponding to the local oscillator may be one of:
a mathematical center between a left edge of a first component carrier in at least one component carrier corresponding to the local oscillator and a right edge of a second component carrier in the at least one component carrier corresponding to the local oscillator; where the first component carrier refers to a leftmost component carrier in the at least one component carrier corresponding to the local oscillator in a frequency domain, and the second component carrier refers to a rightmost component carrier in the at least one component carrier corresponding to the local oscillator in the frequency domain;
a mathematical center between a left edge of a first activated component carrier in at least one activated component carrier corresponding to the local oscillator and a right edge of a second activated component carrier in the at least one activated component carrier corresponding to the local oscillator; where the first activated component carrier refers to a leftmost activated component carrier in the at least one activated component carrier corresponding to the local oscillator in the frequency domain, and the second activated component carrier refers to a rightmost activated component carrier in the at least one activated component carrier corresponding to the local oscillator in the frequency domain; or
a mathematical center between a left edge of a first activated bandwidth part in at least one activated bandwidth part corresponding to the local oscillator and a right edge of a second activated bandwidth part in the at least one activated bandwidth part corresponding to the local oscillator; where the first activated bandwidth part refers to a leftmost activated bandwidth part in the at least one activated bandwidth part corresponding to the local oscillator in the frequency domain, and the second activated bandwidth part refers to a rightmost activated bandwidth part in the at least one activated bandwidth part corresponding to the local oscillator in the frequency domain.

Further, in response to the local oscillator corresponding to one component carrier, the default location of the direct current subcarrier corresponding to the local oscillator is a mathematical center of the one component carrier; in response to the local oscillator corresponding to one activated component carrier, the default location of the direct current subcarrier corresponding to the local oscillator is a mathematical center of the one activated component carrier; in response to the local oscillator corresponding to one activated bandwidth part, the default location of the direct current subcarrier corresponding to the local oscillator is a mathematical center of the one activated bandwidth part.

In some embodiments, in response to an offset existing between the actual location and the default location of the direct current subcarrier, the terminal device also sends offset information between the actual location and the default location to the network device, and the offset information may also be included in the direct current subcarrier information.

In some implementations, the number of local oscillators of the terminal device may be carried in a dual power amplifier (PA)-architecture signaling or a predefined signaling, and the network device receives such signaling to determine the number of local oscillators of the terminal device.

In step 902, an actual location of at least one direct current subcarrier of the terminal device is determined according to the direct current subcarrier information.

In embodiments of the present disclosure, the network device is able to determine the actual location of the direct current subcarrier of the terminal device according to the direct current subcarrier information received.

In some embodiments, the network device is able to determine the actual location of the direct current subcarrier of the terminal device according to the component carrier information and/or the bandwidth part information corresponding to each of the at least one local oscillator.

It can be understood that the method for reporting information as set forth in embodiments of the present disclosure is not only applicable to uplink multi-carrier aggregation, but also applicable to other communication systems, such as dual connectivity (DC) system.

In summary, the direct current subcarrier information sent by the terminal device is received, the direct current subcarrier information includes: the number of local oscillators of the terminal device, and the component carrier information and/or the bandwidth part information corresponding to each of the at least one local oscillator, and the actual location of the at least one direct current subcarrier of the terminal device is determined according to the direct current subcarrier information, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Referring to FIG. 10, FIG. 10 is a schematic flowchart of a method for reporting information according to embodiments of the present disclosure. It should be noted that the method for reporting information in embodiments of the present disclosure is performed by a network device. As shown in FIG. 10, the method may include following steps.

In step 1001, direct current subcarrier information sent by a terminal device is received. The direct current subcarrier information includes: a number of local oscillators of the terminal device, component carrier information and/or bandwidth part information corresponding to each of at least one local oscillator, and default location information of a direct current subcarrier corresponding to each of the at least one local oscillator.

The default location information of the direct current subcarrier corresponding to the local oscillator indicates a default location of the direct current subcarrier.

As a first possible implementation, a default location of a direct current subcarrier corresponding to a certain local oscillator is a mathematical center between a left edge of a first component carrier in at least one component carrier corresponding to the local oscillator and a right edge of a second component carrier in the at least one component carrier corresponding to the local oscillator.

The first component carrier refers to a leftmost component carrier in the at least one component carrier corresponding to the local oscillator in a frequency domain, and the second component carrier refers to a rightmost component carrier in the at least one component carrier corresponding to the local oscillator in the frequency domain.

For example, referring to FIG. 4, the local oscillator LO corresponds to three component carriers CC1, CC2 and CC3. The default location of the direct current subcarrier corresponding to the local oscillator is the mathematical center between the left edge of the first component carrier in the at least one component carrier corresponding to the local oscillator and the right edge of the second component carrier in the at least one component carrier corresponding to the local oscillator, i.e., the mathematical center between the left edge of CC1 and the right edge of CC3, as shown in FIG. 4.

It can be understood that, further, if the local oscillator only corresponds to one component carrier, the default location of the direct current subcarrier corresponding to the local oscillator is a mathematical center of the one component carrier.

In embodiments of the present disclosure, if default location information of a direct current subcarrier corresponding to a certain local oscillator indicates that the default location of the direct current subcarrier is the mathematical center between the left edge of the first component carrier in the at least one component carrier corresponding to the local oscillator and the right edge of the second component carrier in the at least one component carrier corresponding to the local oscillator, the terminal device may send the component carrier information and the bandwidth part information corresponding to the local oscillator to the network device, or only send the component carrier information corresponding to the local oscillator to further reduce the signaling overhead. That is, the network device can determine the default location of the direct current subcarrier corresponding to the local oscillator only according to the component carrier information corresponding to the local oscillator, and further determine the actual location of the direct current subcarrier.

As a second possible implementation, a default location of a direct current subcarrier corresponding to a certain local oscillator is a mathematical center between a left edge of a first activated component carrier in at least one activated component carrier corresponding to the local oscillator and a right edge of a second activated component carrier in the at least one activated component carrier corresponding to the local oscillator.

The first activated component carrier refers to a leftmost activated component carrier in the at least one activated component carrier corresponding to the local oscillator in the frequency domain, and the second activated component carrier refers to a rightmost activated component carrier in the at least one activated component carrier corresponding to the local oscillator in the frequency domain.

For example, referring to FIG. 5, the local oscillator LO corresponds to three component carriers CC1, CC2 and CC3, in which the component carriers CC1 and CC2 are activated component carriers. The default location of the direct current subcarrier corresponding to the local oscillator is the mathematical center between the left edge of the first activated component carrier in the at least one activated component carrier corresponding to the local oscillator and the right edge of the second activated component carrier in the at least one activated component carrier corresponding to the local oscillator, i.e., the mathematical center between the left edge of CC1 and the right edge of CC2, as shown in FIG. 5.

It can be understood that, further, if the local oscillator only corresponds to one activated component carrier, the default location of the direct current subcarrier corresponding to the local oscillator is a mathematical center of the one activated component carrier.

In embodiments of the present disclosure, if default location information of a direct current subcarrier corresponding to a certain local oscillator indicates that the default location of the direct current subcarrier is the mathematical center between the left edge of the first activated component carrier in the at least one activated component carrier corresponding to the local oscillator and the right edge of the second activated component carrier in the at least one activated component carrier corresponding to the local oscillator, the terminal device may send the component carrier information and the bandwidth part information corresponding to the local oscillator to the network device, or only send the component carrier information corresponding to the local oscillator to further reduce the signaling overhead. That is, the network device can determine the default location of the direct current subcarrier corresponding to the local oscillator only according to the component carrier information corresponding to the local oscillator, and further determine the actual location of the direct current subcarrier.

As a third possible implementation, a default location of a direct current subcarrier corresponding to a certain local oscillator is a mathematical center between a left edge of a first activated bandwidth part in at least one activated bandwidth part corresponding to the local oscillator and a right edge of a second activated bandwidth part in the at least one activated bandwidth part corresponding to the local oscillator.

The first activated bandwidth part refers to a leftmost activated bandwidth part in the at least one activated bandwidth part corresponding to the local oscillator in the frequency domain, and the second activated bandwidth part refers to a rightmost activated bandwidth part in the at least one activated bandwidth part corresponding to the local oscillator in the frequency domain.

For example, referring to FIG. 6, which is a schematic diagram showing a default location of another direct current subcarrier according to embodiments of the present disclosure, the local oscillator LO corresponds to three component carriers CC1, CC2 and CC3, in which the component carriers CC1 and CC2 are activated bandwidth parts, an activated bandwidth part in CC1 is BWP12, and an activated bandwidth part in CC2 is BWP21. The default location of the direct current subcarrier corresponding to the local oscillator is the mathematical center between the left edge of the first activated bandwidth part in the at least one activated bandwidth part corresponding to the local oscillator and the right edge of the second activated bandwidth part in the at least one activated bandwidth part corresponding to the local oscillator, i.e., the mathematical center between the left edge of BWP12 and the right edge of BWP21, as shown in FIG. 6.

It can be understood that, further, if the local oscillator only corresponds to one activated bandwidth part, the default location of the direct current subcarrier corresponding to the local oscillator is a mathematical center of the one activated bandwidth part.

In embodiments of the present disclosure, if default location information of a direct current subcarrier corresponding to a certain local oscillator indicates that the default location of the direct current subcarrier is the mathematical center between the left edge of the first activated bandwidth part in the at least one activated bandwidth part corresponding to the local oscillator and the right edge of the second activated bandwidth part in the at least one activated bandwidth part corresponding to the local oscillator, the terminal device may send the component carrier information and the bandwidth part information corresponding to the local oscillator to the network device, or only send the bandwidth part information corresponding to the local oscillator to further reduce the signaling overhead. That is, the network device can determine the default location of the direct current subcarrier corresponding to the local oscillator only according to the bandwidth part information corresponding to the local oscillator, and further determine the actual location of the direct current subcarrier. In embodiments of the present disclosure, the bandwidth part information is activated bandwidth part information. That is, for the example shown in FIG. 6, the terminal device may send the component carriers CC1, CC2 and CC3 and the bandwidth part information BWP12 and BWP21 corresponding to the local oscillator LO to the network device, or only send the bandwidth part information BWP12 and BWP21 corresponding to the local oscillator LO to further reduce the signaling overhead.

In embodiments of the present disclosure, optionally, the default location information of the direct current subcarrier corresponding to the local oscillator may be reported via information of at least 2 bits. For example, a value of the default location information is 1 to indicate that the default location of the direct current subcarrier is the default location as described in the first possible implementation; the value of the default location information is 2 to indicate that the default location of the direct current subcarrier is the default location as described in the second possible implementation; and the value of the default location information is 3 to indicate that the default location of the direct current subcarrier is the default location as described in the third possible implementation, and so on.

In embodiments of the present disclosure, the default location information of the direct current subcarriers corresponding to various local oscillators may be the same or different.

In some embodiments, the component carriers and the bandwidth parts may be encoded, and a local oscillator LO corresponding to a serial number of a component carrier and a serial number of a bandwidth part is included in the direct current subcarrier information in a mapping manner and sent to the network device.

If the terminal device only sends the component carrier information or the bandwidth part information corresponding to the local oscillator, similarly, the local oscillator LO corresponding to the serial number of the component carrier or the serial number of the bandwidth part is included in the direct current subcarrier information in a mapping manner and sent to the network device.

In embodiments of the present disclosure, the network device can determine the actual location of the at least one direct current subcarrier of the terminal device according to the component carrier information and/or the bandwidth part information corresponding to each of the at least one local oscillator as well as the default location information of the direct current subcarrier corresponding to each of the at least one local oscillator sent by the terminal device.

In step 1002, an actual location of at least one direct current subcarrier of the terminal device is determined according to the direct current subcarrier information.

In embodiments of the present disclosure, the network device is able to determine the actual location of the direct current subcarrier of the terminal device according to the direct current subcarrier information received.

The network device is able to receive the default location information of the direct current subcarrier corresponding to each of the at least one local oscillator and the component carrier information and/or the bandwidth part information corresponding to each of at least one local oscillator sent by the terminal device to determine the default location of the direct current subcarrier indicated by the default location information, and to further determine the actual location of the direct current subcarrier.

It can be understood that the method for reporting information as set forth in embodiments of the present disclosure is not only applicable to uplink multi-carrier aggregation, but also applicable to other communication systems, such as dual connectivity (DC) system.

In summary, the direct current subcarrier information sent by the terminal device is received, the direct current subcarrier information includes: the number of local oscillators of the terminal device, the component carrier information and/or the bandwidth part information corresponding to each of at least one local oscillator, and the default location information of the direct current subcarrier corresponding to each of the at least one local oscillator, and the actual location of the at least one direct current subcarrier of the terminal device is determined according to the direct current subcarrier information, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

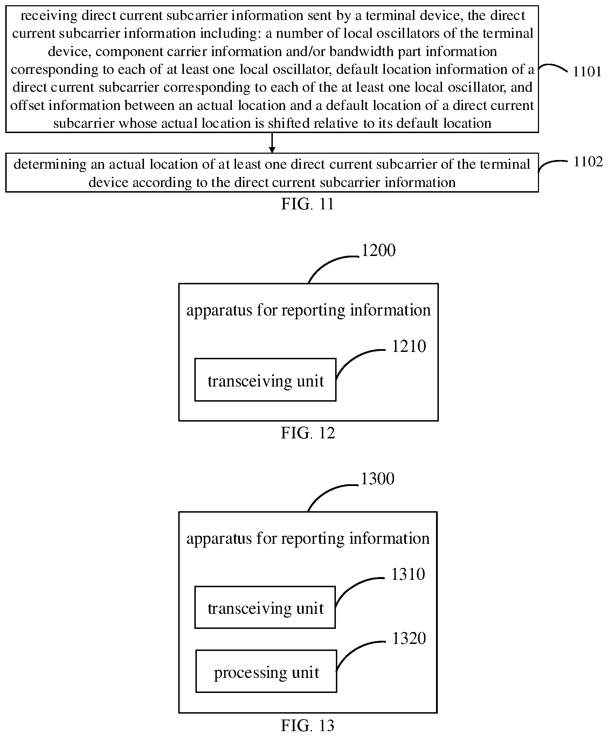

Referring to FIG. 11, FIG. 11 is a schematic flowchart of a method for reporting information according to embodiments of the present disclosure. It should be noted that the method for reporting information in embodiments of the present disclosure is performed by a network device. As shown in FIG. 11, the method may include a following step.

In step 1101, direct current subcarrier information sent by a terminal device is received. The direct current subcarrier information includes: a number of local oscillators of the terminal device, component carrier information and/or bandwidth part information corresponding to each of at least one local oscillator, default location information of a direct current subcarrier corresponding to each of the at least one local oscillator, and offset information between an actual location and a default location of a direct current subcarrier whose actual location is shifted relative to its default location. That is, in embodiments of the present disclosure.

The default location information of the direct current subcarrier corresponding to the local oscillator indicates a default location of the direct current subcarrier.

As a first possible implementation, a default location of a direct current subcarrier corresponding to a certain local oscillator is a mathematical center between a left edge of a first component carrier in at least one component carrier corresponding to the local oscillator and a right edge of a second component carrier in the at least one component carrier corresponding to the local oscillator.

The first component carrier refers to a leftmost component carrier in the at least one component carrier corresponding to the local oscillator in a frequency domain, and the second component carrier refers to a rightmost component carrier in the at least one component carrier corresponding to the local oscillator in the frequency domain.

It can be understood that, further, if the local oscillator only corresponds to one component carrier, the default location of the direct current subcarrier corresponding to the local oscillator is a mathematical center of the one component carrier.

In embodiments of the present disclosure, if default location information of a direct current subcarrier corresponding to a certain local oscillator indicates that the default location of the direct current subcarrier is the mathematical center between the left edge of the first component carrier in the at least one component carrier corresponding to the local oscillator and the right edge of the second component carrier in the at least one component carrier corresponding to the local oscillator, the terminal device may send the component carrier information and the bandwidth part information corresponding to the local oscillator to the network device, or only send the component carrier information corresponding to the local oscillator to further reduce the signaling overhead. That is, the network device can determine the default location of the direct current subcarrier corresponding to the local oscillator only according to the component carrier information corresponding to the local oscillator, and further determine the actual location of the direct current subcarrier.

As a second possible implementation, a default location of a direct current subcarrier corresponding to a certain local oscillator is a mathematical center between a left edge of a first activated component carrier in at least one activated component carrier corresponding to the local oscillator and a right edge of a second activated component carrier in the at least one activated component carrier corresponding to the local oscillator.

The first activated component carrier refers to a leftmost activated component carrier in the at least one activated component carrier corresponding to the local oscillator in the frequency domain, and the second activated component carrier refers to a rightmost activated component carrier in the at least one activated component carrier corresponding to the local oscillator in the frequency domain.

It can be understood that, further, if the local oscillator only corresponds to one activated component carrier, the default location of the direct current subcarrier corresponding to the local oscillator is a mathematical center of the one activated component carrier.

In embodiments of the present disclosure, if default location information of a direct current subcarrier corresponding to a certain local oscillator indicates that the default location of the direct current subcarrier is the mathematical center between the left edge of the first activated component carrier in the at least one activated component carrier corresponding to the local oscillator and the right edge of the second activated component carrier in the at least one activated component carrier corresponding to the local oscillator, the terminal device may send the component carrier information and the bandwidth part information corresponding to the local oscillator to the network device, or only send the component carrier information corresponding to the local oscillator to further reduce the signaling overhead. That is, the network device can determine the default location of the direct current subcarrier corresponding to the local oscillator only according to the component carrier information corresponding to the local oscillator, and further determine the actual location of the direct current subcarrier.

As a third possible implementation, a default location of a direct current subcarrier corresponding to a certain local oscillator is a mathematical center between a left edge of a first activated bandwidth part in at least one activated bandwidth part corresponding to the local oscillator and a right edge of a second activated bandwidth part in the at least one activated bandwidth part corresponding to the local oscillator.

The first activated bandwidth part refers to a leftmost activated bandwidth part in the at least one activated bandwidth part corresponding to the local oscillator in the frequency domain, and the second activated bandwidth part refers to a rightmost activated bandwidth part in the at least one activated bandwidth part corresponding to the local oscillator in the frequency domain.

It can be understood that, further, if the local oscillator only corresponds to one activated bandwidth part, the default location of the direct current subcarrier corresponding to the local oscillator is a mathematical center of the one activated bandwidth part.

In embodiments of the present disclosure, if default location information of a direct current subcarrier corresponding to a certain local oscillator indicates that the default location of the direct current subcarrier is the mathematical center between the left edge of the first activated bandwidth part in the at least one activated bandwidth part corresponding to the local oscillator and the right edge of the second activated bandwidth part in the at least one activated bandwidth part corresponding to the local oscillator, the terminal device may send the component carrier information and the bandwidth part information corresponding to the local oscillator to the network device, or only send the bandwidth part information corresponding to the local oscillator to further reduce the signaling overhead. That is, the network device can determine the default location of the direct current subcarrier corresponding to the local oscillator according to the bandwidth part information corresponding to the local oscillator only, and further determine the actual location of the direct current subcarrier. In embodiments of the present disclosure, the bandwidth part information is activated bandwidth part information. That is, for the example shown in FIG. 6, the terminal device may send the component carriers CC1, CC2 and CC3 and the bandwidth part information BWP12 and BWP21 corresponding to the local oscillator LO to the network device, or only send the bandwidth part information BWP12 and BWP21 corresponding to the local oscillator LO to further reduce the signaling overhead.

In embodiments of the present disclosure, optionally, the default location information of the direct current subcarrier corresponding to the local oscillator may be reported via information of at least 2 bits. For example, a value of the default location information is 1 to indicate that the default location of the direct current subcarrier is the default location as described in the first possible implementation; the value of the default location information is 2 to indicate that the default location of the direct current subcarrier is the default location as described in the second possible implementation; and the value of the default location information is 3 to indicate that the default location of the direct current subcarrier is the default location as described in the third possible implementation, and so on.

In embodiments of the present disclosure, the direct current subcarrier information also includes offset information between an actual location and a default location of a direct current subcarrier whose actual location is shifted relative to its default location. That is, in embodiments of the present disclosure, there exists at least one local oscillator, for each of these local oscillator, the actual location of the respective direct current subcarrier corresponding the local oscillator is shifted relative to its default location, and the terminal device also sends the offset information between the actual location and the default location of the direct current subcarrier to the network device.

As an example, referring to FIG. 8, which is a schematic diagram showing an actual location of a direct current subcarrier according to embodiments of the present disclosure, local oscillator LO1 corresponds to component carriers CC1 and CC2, local oscillator LO2 corresponds to component carrier CC3, the activated bandwidth part in the component carrier CC1 is BWP12, the activated bandwidth part in the component carrier CC2 is BWP21, and the activated bandwidth part in the component carrier CC3 is BWP32. In this example, the default location of the direct current subcarrier corresponding to each local oscillator of the terminal device is the geometry of the left edge of the first activated bandwidth part in the at least one activated bandwidth part corresponding to the local oscillator and the right edge of the second activated bandwidth part in the at least one activated bandwidth part corresponding to the local oscillator. That is, the default location of the direct current subcarrier corresponding to the local oscillator LO1 is the mathematical center of the left edge of BWP12 and the right edge of BWP21, and the default location of the direct current subcarrier corresponding to the local oscillator LO2 is the mathematical center of BWP32, as shown in FIG. 8. At this time, the actual location of the direct current subcarrier corresponding to the local oscillator LO1 is shifted relative to the default location, with a shifted amount recorded as offset. Therefore, the direct current subcarrier information also includes the offset information between the actual location and the default location of the direct current subcarrier corresponding to the local oscillator LO1.

It can be understood that if the actual location of the direct current subcarrier corresponding to the local oscillator LO2 is not at the mathematical center of BWP32, the direct current subcarrier information of the terminal device also includes the offset information between the actual location and the default location of the direct current subcarrier corresponding to the local oscillator LO2.

In step 1102, an actual location of at least one direct current subcarrier of the terminal device is determined according to the direct current subcarrier information.

In embodiments of the present disclosure, the network device is able to determine the actual location of the direct current subcarrier of the terminal device according to the direct current subcarrier information received.

The network device is able to receive the default location information of the direct current subcarrier corresponding to each of the at least one local oscillator and the component carrier information and/or the bandwidth part information corresponding to each of at least one local oscillator sent by the terminal device to determine the default location of the direct current subcarrier indicated by the default location information, and to further determine the actual location of the direct current subcarrier. In response to an actual location of a direct current subcarrier being shifted relative to its default location, the network device is able to determine the actual location of the direct current subcarrier according to the offset information included in the direct current subcarrier information.

It can be understood that the method for reporting information as set forth in embodiments of the present disclosure is not only applicable to uplink multi-carrier aggregation, but also applicable to other communication systems, such as dual connectivity (DC) system.

In summary, the direct current subcarrier information sent by the terminal device is received, the direct current subcarrier information includes: the number of local oscillators of the terminal device, the component carrier information and/or the bandwidth part information corresponding to each of at least one local oscillator, the default location information of the direct current subcarrier corresponding to each of the at least one local oscillator, and the offset information between the actual location and the default location of the direct current subcarrier whose actual location is shifted relative to its default location, and the actual location of at least one direct current subcarrier of the terminal device is determined according to the direct current subcarrier information, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Corresponding to the method for reporting information according to the above-mentioned embodiments, the present disclosure also provides an apparatus for reporting information. Since the apparatus for reporting information according to embodiments of the present disclosure corresponds to the method for reporting information according to the above-mentioned embodiments, the implementations of the method for reporting information are also applicable to the apparatus for reporting information as set forth in the following embodiments of the present disclosure, which will not be elaborated again in the following embodiments.

Referring to FIG. 12, FIG. 12 is a schematic block diagram of an apparatus for reporting information according to embodiments of the present disclosure.

As shown in FIG. 12, the apparatus 1200 for reporting information includes a transceiver unit 1210.

The transceiver unit 1210 is configured to send direct current subcarrier information to a network device. The direct current subcarrier information includes: a number of local oscillators of the terminal device, and component carrier information and/or bandwidth part information corresponding to each of at least one local oscillator. The component carrier information and/or the bandwidth part information corresponding to each of the at least one local oscillator is used to determine an actual location of at least one direct current subcarrier of the terminal device.

Optionally, the direct current subcarrier information further includes: default location information of a direct current subcarrier corresponding to each of the at least one local oscillator.

Optionally, in response to an offset existing between an actual location and a default location of at least one direct current subcarrier, the direct current subcarrier information further includes: offset information between the actual location and the default location of the direct current subcarrier

Optionally, a default location of a direct current subcarrier corresponding to a local oscillator is at least one of: a mathematical center between a left edge of a first component carrier in at least one component carrier corresponding to the local oscillator and a right edge of a second component carrier in the at least one component carrier corresponding to the local oscillator; a mathematical center between a left edge of a first activated component carrier in at least one activated component carrier corresponding to the local oscillator and a right edge of a second activated component carrier in the at least one activated component carrier corresponding to the local oscillator; or a mathematical center between a left edge of a first activated bandwidth part in at least one activated bandwidth part corresponding to the local oscillator and a right edge of a second activated bandwidth part in the at least one activated bandwidth part corresponding to the local oscillator.

Optionally, the apparatus further includes: in response to the local oscillator corresponding to one component carrier, the c of the direct current subcarrier corresponding to the local oscillator being a mathematical center of the one component carrier; in response to the local oscillator corresponding to one activated component carrier, the default location of the direct current subcarrier corresponding to the local oscillator being a mathematical center of the one activated component carrier; in response to the local oscillator corresponding to one activated bandwidth part, the default location of the direct current subcarrier corresponding to the local oscillator being a mathematical center of the one activated bandwidth part.

Optionally, the number of local oscillators of the terminal device is carried in a dualPA-Architecture signaling or a predefined signaling.

Optionally, the default location information of the direct current subcarrier corresponding to each of the at least one local oscillator includes at least 2 bits.

Optionally, in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

With the apparatus for reporting information according to embodiments of the present disclosure, the direct current subcarrier information may be sent to the network device, the direct current subcarrier information includes: the number of local oscillators of the terminal device, and the component carrier information and/or the bandwidth part information corresponding to each of at least one local oscillator, and the component carrier information and/or the bandwidth part information corresponding to each of the at least one local oscillator is used to determine the actual location of at least one direct current subcarrier of the terminal device, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

Referring to FIG. 13, FIG. 13 is a schematic block diagram of an apparatus for reporting information according to embodiments of the present disclosure.

As shown in FIG. 13, the apparatus 1300 for reporting information includes a transceiver unit 1310 and a processing unit 1320.

The transceiver unit 1310 is configured to receive direct current subcarrier information sent by a terminal device. The direct current subcarrier information includes: a number of local oscillators of the terminal device, and component carrier information and/or bandwidth part information corresponding to each of at least one local oscillator.

The processing unit 1320 is configured to determine an actual location of at least one direct current subcarrier of the terminal device according to the direct current subcarrier information.

Optionally, the direct current subcarrier information further includes: default location information of a direct current subcarrier corresponding to each of the at least one local oscillator.

Optionally, in response to an offset existing between an actual location and a default location of at least one direct current subcarrier, the direct current subcarrier information further includes: offset information between the actual location and the default location of the direct current subcarrier.

Optionally, a default location of a direct current subcarrier corresponding to a local oscillator is at least one of: a mathematical center between a left edge of a first component carrier in at least one component carrier corresponding to the local oscillator and a right edge of a second component carrier in the at least one component carrier corresponding to the local oscillator; a mathematical center between a left edge of a first activated component carrier in at least one activated component carrier corresponding to the local oscillator and a right edge of a second activated component carrier in the at least one activated component carrier corresponding to the local oscillator; or a mathematical center between a left edge of a first activated bandwidth part in at least one activated bandwidth part corresponding to the local oscillator and a right edge of a second activated bandwidth part in the at least one activated bandwidth part corresponding to the local oscillator.

Optionally, the apparatus further includes: in response to the local oscillator corresponding to one component carrier, the default location of the direct current subcarrier corresponding to the local oscillator being a mathematical center of the one component carrier; in response to the local oscillator corresponding to one activated component carrier, the default location of the direct current subcarrier corresponding to the local oscillator being a mathematical center of the one activated component carrier; in response to the local oscillator corresponding to one activated bandwidth part, the default location of the direct current subcarrier corresponding to the local oscillator being a mathematical center of the one activated bandwidth part.

Optionally, the number of local oscillators of the terminal device is carried in a dualPA-Architecture signaling or a predefined signaling.

Optionally, the default location information of the direct current subcarrier corresponding to each of the at least one local oscillator includes at least 2 bits.

Optionally, in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

With the apparatus for reporting information according to embodiments of the present disclosure, the direct current subcarrier information sent by the terminal device may be received, the direct current subcarrier information includes: the number of local oscillators of the terminal device, and the component carrier information and/or the bandwidth part information corresponding to each of at least one local oscillator, and the actual location of at least one direct current subcarrier of the terminal device is determined according to the direct current subcarrier information, so that the network device can determine the actual location of the direct current subcarrier of the terminal device according to the information reported by the terminal device, which effectively improves the demodulation performance of the network device, improves the communication efficiency, reduces the signaling overhead, and improves the universality of the method.

In order to implement the above embodiments, embodiments of the present disclosure also provide a communication apparatus. The communication apparatus includes: a processor; and a memory, having stored therein a computer program. The processor is configured to execute the computer program stored in the memory to cause the apparatus to perform the method according to embodiments of the present disclosure as described with reference to FIG. 2, FIG. 3 and FIG. 7.

In order to implement the above embodiments, embodiments of the present disclosure also provide a communication apparatus. The communication apparatus includes: a processor; and a memory, having stored therein a computer program. The processor is configured to execute the computer program stored in the memory to cause the apparatus to perform the method according to embodiments of the present disclosure as described with reference to FIG. 9 to FIG. 11.

In order to implement the above embodiments, embodiments of the present disclosure also provide a communication apparatus. The communication apparatus includes: a processor and an interface circuit. The interface circuit is configured to receive a code instruction and transmit the code instruction to the processor. The processor is configured to run the code instruction to perform the method according to embodiments of the present disclosure as described with reference to FIG. 2, FIG. 3 and FIG. 7.

In order to implement the above embodiments, embodiments of the present disclosure also provide a communication apparatus. The communication apparatus includes: a processor and an interface circuit. The interface circuit is configured to receive a code instruction and transmit the code instruction to the processor. The processor is configured to run the code instruction to perform the method according to embodiments of the present disclosure as described with reference to FIG. 9 to FIG. 11.

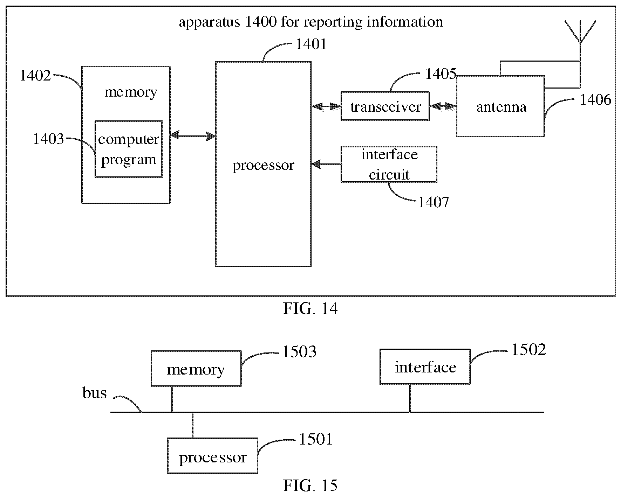

Referring to FIG. 14, FIG. 14 is a schematic block diagram of another apparatus 1400 for reporting information according to embodiments of the present disclosure. The apparatus 1400 for reporting information may be a network device, may also be a terminal device, may also be a chip, a chip system, or a processor that supports the network device to implement the above method, or may also be a chip, a chip system, or a processor that supports the terminal device to implement the above method. The apparatus may be used to implement the methods as described in the above method embodiments, and for details, reference may be made to the descriptions on the above method embodiments.

The apparatus 1400 for reporting information may include one or more processors 1401. The processor 1401 may be a general-purpose processor or a special-purpose processor. For example, it may be a baseband processor or a central processing unit. The baseband processor may be configured to process a communication protocol and communication data, and the central processing unit may be configured to control an apparatus for reporting information (such as a base station, a baseband chip, a terminal, a terminal chip, a DU or a CU, etc.), execute computer programs, and process data of computer programs.

Optionally, the apparatus 1400 for reporting information may further include one or more memories 1402 that may have stored therein a computer program 1403. The processor 1401 executes the computer program 1403 to cause the apparatus 1400 for reporting information to implement the methods as described in the above method embodiments. The computer program 1403 may be solidified in the processor 1401, and in this case, the processor 1401 may be implemented by hardware.

Optionally, the memory 1402 may have stored therein data. The apparatus 1400 for reporting information and the memory 1402 may be set separately or integrated together.

Optionally, the apparatus 1400 for reporting information may further include a transceiver 1405 and an antenna 1406. The transceiver 1405 may be called a transceiver unit, a transceiving machine, a transceiving circuit or the like, for implementing a transceiving function. The transceiver 1405 may include a receiver and a transmitter. The receiver may be called a receiving machine, a receiving circuit or the like, for implementing a receiving function. The transmitter may be called a sending machine, a sending circuit or the like for implementing a sending function.

Optionally, the apparatus 1400 for reporting information may further include one or more interface circuits 1407. The interface circuit 1407 is configured to receive a code instruction and transmit the code instruction to the processor 1401. The processor 1401 runs the code instruction to enable the apparatus 1400 for reporting information to execute the methods as described in the foregoing method embodiments.

In the case where the apparatus 1400 for reporting information is the terminal device, the transceiver 1405 is configured to perform the step 201 in FIG. 2, the step 301 in FIG. 3, or the step 701 in FIG. 7.

In the case where the apparatus 1400 for reporting information is the network device, the transceiver 1405 is configured to perform the step 901 in FIG. 9, the step 1001 in FIG. 10, or the step 1101 in FIG. 11; and the processor 1401 is configured to perform the step 902 in FIG. 9, the step 1002 in FIG. 10, or the step 1102 in FIG. 11.

In an implementation, the processor 1401 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation, the apparatus 1400 for reporting information may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The apparatus for reporting information described in the above embodiments may be the network device or the terminal device, but the scope of the apparatus for reporting information described in the present disclosure is not limited thereto, and a structure of the apparatus for reporting information is not limited by FIG. 12 to FIG. 13. The apparatus for reporting information may be a stand-alone device or may be a part of a larger device. For example, the apparatus for reporting information may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal device, an intelligent terminal, a cellular phone, a wireless device, a handheld machine, a mobile unit, a vehicle device, a network device, a cloud device, an artificial intelligence device, etc.;
(6) others.

For the case where the apparatus for reporting information may be a chip or a chip system, reference may be made to a schematic structural diagram of the chip shown in FIG. 15. The chip shown in FIG. 15 includes a processor 1501 and an interface 1502. In the chip, one or more processors 1501 may be provided, and a plurality of interfaces 1502 may be provided.

For the case where the chip is used to implement functions of the network device in embodiments of the present disclosure, the interface 1502 is configured to receive a code instruction and transmit the code instruction to the processor; and the processor 1501 is configured to run the code instruction to perform the method as described with reference to FIG. 2, FIG. 3 and FIG. 7.

For the case where the chip is used to implement functions of the terminal device in embodiments of the present disclosure, the interface 1502 is configured to receive a code instruction and transmit the code instruction to the processor; and the processor 1501 is configured to run the code instruction to perform the method as described with reference to FIG. 9 to FIG. 11.

Optionally, the chip further includes a memory 1503 for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present disclosure.

Embodiments of the present disclosure also provide a communication system. The system includes the apparatus for reporting information as the terminal device and the apparatus for reporting information as the network device as described in the aforementioned embodiments with reference to FIG. 12 to FIG. 13, or the system includes the apparatus for reporting information as the terminal device and the apparatus for reporting information as the network device as described in the aforementioned embodiments with reference to FIG. 14.

The present disclosure also provides a readable storage medium having stored therein instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using the software, the above embodiments may be implemented in whole or in part in a form of the computer program product. The computer program product includes one or more computer programs. When the computer program is loaded and executed on the computer, all or part of the processes or functions according to embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present disclosure are only for convenience of description, and are not intended to limit the scope of embodiments of the present disclosure, nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of various information in each table are just examples, and may be configured as other values, which are not limited in the present disclosure. When configuring a correspondence between the information and various parameters, it is not necessary to configure all the correspondences shown in the tables. For example, the correspondences shown in some rows of a table in the present disclosure may not be configured. For another example, appropriate deformations or adjustments (such as splitting, merging, and so on) can be made based on the above table. The names of parameters shown in the titles of the above tables may also adopt other names understandable by the apparatus for reporting information, and the values or representations of the parameters may also be other values or representations understandable by the apparatus for reporting information. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present disclosure may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific applications and design constraints of the technical solution. For each particular application, those skilled in the art may use different methods to implement the described functions, but such implementation should not be considered beyond the scope of the present disclosure.

Those skilled in the art can clearly understand that for the convenience and brevity of the description, the specific working process of the above-described system, device and unit may refer to the corresponding process in the foregoing method embodiments, which will not be repeated here.

It can be understood that various forms of flowcharts shown above may be used to reorder, add, or remove steps. For example, the steps described in the present disclosure may be performed in parallel, sequentially, or in a different order. There is no limitation herein as long as the desired results of the technical solutions disclosed herein can be realized.

The above-mentioned specific embodiments do not constitute a limitation on the protection scope of the present disclosure. It can be understood by those skilled in the art that various modifications, combinations, sub-combinations and substitutions may be made depending on design requirements and other factors. Any modifications, equivalent replacements, and improvements made within the spirit and principle of the present disclosure shall be included within the protection scope of the present disclosure.

## Claims

1. A method for reporting information, performed by a terminal device, comprising:
sending direct current subcarrier information to a network device, wherein the direct current subcarrier information comprises: a number of local oscillators of the terminal device, and component carrier information and/or bandwidth part information corresponding to each of at least one local oscillator;
wherein the component carrier information and/or the bandwidth part information corresponding to each of the at least one local oscillator is used to determine an actual location of at least one direct current subcarrier of the terminal device.

2. The method according to claim 1, wherein the direct current subcarrier information further comprises: default location information of a direct current subcarrier corresponding to each of the at least one local oscillator.

3. The method according to claim 2, further comprising:
in response to an offset existing between an actual location and a default location of at least one direct current subcarrier, the direct current subcarrier information further comprising: offset information between the actual location and the default location of the direct current subcarrier.

4. The method according to claim 2, wherein a default location of a direct current subcarrier corresponding to a local oscillator is at least one of:
a mathematical center between a left edge of a first component carrier in at least one component carrier corresponding to the local oscillator and a right edge of a second component carrier in the at least one component carrier corresponding to the local oscillator;
a mathematical center between a left edge of a first activated component carrier in at least one activated component carrier corresponding to the local oscillator and a right edge of a second activated component carrier in the at least one activated component carrier corresponding to the local oscillator; or
a mathematical center between a left edge of a first activated bandwidth part in at least one activated bandwidth part corresponding to the local oscillator and a right edge of a second activated bandwidth part in the at least one activated bandwidth part corresponding to the local oscillator.

5. The method according to claim 4, further comprising:
in response to the local oscillator corresponding to one component carrier, the default location of the direct current subcarrier corresponding to the local oscillator being a mathematical center of the one component carrier;
in response to the local oscillator corresponding to one activated component carrier, the default location of the direct current subcarrier corresponding to the local oscillator being a mathematical center of the one activated component carrier;
in response to the local oscillator corresponding to one activated bandwidth part, the default location of the direct current subcarrier corresponding to the local oscillator being a mathematical center of the one activated bandwidth part.

6. The method according to any one of claims 1 to 5, wherein the number of local oscillators of the terminal device is carried in a dual power amplifier (PA)-architecture signaling or a predefined signaling.

7. The method according to any one of claims 2 to 5, wherein the default location information of the direct current subcarrier corresponding to each of the at least one local oscillator comprises at least 2 bits.

8. The method according to claim 4, wherein in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

9. A method for reporting information, performed by a network device, comprising:
receiving direct current subcarrier information sent by a terminal device, wherein the direct current subcarrier information comprises: a number of local oscillators of the terminal device, and component carrier information and/or bandwidth part information corresponding to each of at least one local oscillator; and
determining an actual location of at least one direct current subcarrier of the terminal device according to the direct current subcarrier information.

10. The method according to claim 9, wherein the direct current subcarrier information further comprises: default location information of a direct current subcarrier corresponding to each of the at least one local oscillator.

11. The method according to claim 10, further comprising:
in response to an offset existing between an actual location and a default location of at least one direct current subcarrier, the direct current subcarrier information further comprising: offset information between the actual location and the default location of the direct current subcarrier.

12. The method according to claim 10, wherein a default location of a direct current subcarrier corresponding to a local oscillator is at least one of:
a mathematical center between a left edge of a first component carrier in at least one component carrier corresponding to the local oscillator and a right edge of a second component carrier in the at least one component carrier corresponding to the local oscillator;
a mathematical center between a left edge of a first activated component carrier in at least one activated component carrier corresponding to the local oscillator and a right edge of a second activated component carrier in the at least one activated component carrier corresponding to the local oscillator; or
a mathematical center between a left edge of a first activated bandwidth part in at least one activated bandwidth part corresponding to the local oscillator and a right edge of a second activated bandwidth part in the at least one activated bandwidth part corresponding to the local oscillator.

13. The method according to claim 12, further comprising:
in response to the local oscillator corresponding to one component carrier, the default location of the direct current subcarrier corresponding to the local oscillator being a mathematical center of the one component carrier;
in response to the local oscillator corresponding to one activated component carrier, the default location of the direct current subcarrier corresponding to the local oscillator being a mathematical center of the one activated component carrier;
in response to the local oscillator corresponding to one activated bandwidth part, the default location of the direct current subcarrier corresponding to the local oscillator being a mathematical center of the one activated bandwidth part.

14. The method according to any one of claims 9 to 13, wherein the number of local oscillators of the terminal device is carried in a dual power amplifier (PA)-architecture signaling or a predefined signaling.

15. The method according to any one of claims 10 to 13, wherein the default location information of the direct current subcarrier corresponding to each of the at least one local oscillator comprises at least 2 bits.

16. The method according to claim 12, wherein in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

17. An apparatus for reporting information, applicable to a terminal device, comprising:
a transceiver unit, configured to send direct current subcarrier information to a network device, wherein the direct current subcarrier information comprises: a number of local oscillators of the terminal device, and component carrier information and/or bandwidth part information corresponding to each of at least one local oscillator;
wherein the component carrier information and/or the bandwidth part information corresponding to each of the at least one local oscillator is used to determine an actual location of at least one direct current subcarrier of the terminal device.

18. The apparatus according to claim 17, wherein the direct current subcarrier information further comprises: default location information of a direct current subcarrier corresponding to each of the at least one local oscillator.

19. The apparatus according to claim 18, wherein in response to an offset existing between an actual location and a default location of at least one direct current subcarrier, the direct current subcarrier information further comprises: offset information between the actual location and the default location of the direct current subcarrier.

20. The apparatus according to claim 18, wherein a default location of a direct current subcarrier corresponding to a local oscillator is at least one of:
a mathematical center between a left edge of a first component carrier in at least one component carrier corresponding to the local oscillator and a right edge of a second component carrier in the at least one component carrier corresponding to the local oscillator;
a mathematical center between a left edge of a first activated component carrier in at least one activated component carrier corresponding to the local oscillator and a right edge of a second activated component carrier in the at least one activated component carrier corresponding to the local oscillator; or
a mathematical center between a left edge of a first activated bandwidth part in at least one activated bandwidth part corresponding to the local oscillator and a right edge of a second activated bandwidth part in the at least one activated bandwidth part corresponding to the local oscillator.

21. The apparatus according to claim 20, further comprising:
in response to the local oscillator corresponding to one component carrier, the default location of the direct current subcarrier corresponding to the local oscillator being a mathematical center of the one component carrier;
in response to the local oscillator corresponding to one activated component carrier, the default location of the direct current subcarrier corresponding to the local oscillator being a mathematical center of the one activated component carrier;
in response to the local oscillator corresponding to one activated bandwidth part, the default location of the direct current subcarrier corresponding to the local oscillator being a mathematical center of the one activated bandwidth part.

22. The apparatus according to any one of claims 17 to 21, wherein the number of local oscillators of the terminal device is carried in a dual power amplifier (PA)-architecture signaling or a predefined signaling.

23. The apparatus according to any one of claims 18 to 21, wherein the default location information of the direct current subcarrier corresponding to each of the at least one local oscillator comprises at least 2 bits.

24. The apparatus according to claim 20, wherein in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

25. An apparatus for reporting information, applicable to a network device, comprising:
a transceiver unit, configured to receive direct current subcarrier information sent by a terminal device, wherein the direct current subcarrier information comprises: a number of local oscillators of the terminal device, and component carrier information and/or bandwidth part information corresponding to each of at least one local oscillator; and
a processing unit, configured to determine an actual location of at least one direct current subcarrier of the terminal device according to the direct current subcarrier information.

26. The apparatus according to claim 9, wherein the direct current subcarrier information further comprises: default location information of a direct current subcarrier corresponding to each of the at least one local oscillator.

27. The apparatus according to claim 26, wherein in response to an offset existing between an actual location and a default location of at least one direct current subcarrier, the direct current subcarrier information further comprises: offset information between the actual location and the default location of the direct current subcarrier.

28. The apparatus according to claim 26, wherein a default location of a direct current subcarrier corresponding to a local oscillator is at least one of:
a mathematical center between a left edge of a first component carrier in at least one component carrier corresponding to the local oscillator and a right edge of a second component carrier in the at least one component carrier corresponding to the local oscillator;
a mathematical center between a left edge of a first activated component carrier in at least one activated component carrier corresponding to the local oscillator and a right edge of a second activated component carrier in the at least one activated component carrier corresponding to the local oscillator; or
a mathematical center between a left edge of a first activated bandwidth part in at least one activated bandwidth part corresponding to the local oscillator and a right edge of a second activated bandwidth part in the at least one activated bandwidth part corresponding to the local oscillator.

29. The apparatus according to claim 28, further comprising:
in response to the local oscillator corresponding to one component carrier, the default location of the direct current subcarrier corresponding to the local oscillator being a mathematical center of the one component carrier;
in response to the local oscillator corresponding to one activated component carrier, the default location of the direct current subcarrier corresponding to the local oscillator being a mathematical center of the one activated component carrier;
in response to the local oscillator corresponding to one activated bandwidth part, the default location of the direct current subcarrier corresponding to the local oscillator being a mathematical center of the one activated bandwidth part.

30. The apparatus according to any one of claims 25 to 29, wherein the number of local oscillators of the terminal device is carried in a dual power amplifier (PA)-architecture signaling or a predefined signaling.

31. The apparatus according to any one of claims 26 to 29, wherein the default location information of the direct current subcarrier corresponding to each of the at least one local oscillator comprises at least 2 bits.

32. The apparatus according to claim 28, wherein in response to the default location of the local oscillator being the mathematical center between the left edge of the first activated bandwidth part in the at least one activated bandwidth part corresponding to the local oscillator and the right edge of the second activated bandwidth part in the at least one activated bandwidth part corresponding to the local oscillator, the bandwidth part information in the direct current subcarrier is activated bandwidth part information.

33. A communication apparatus, comprising:
a processor; and
a memory, having stored therein a computer program,
wherein the processor is configured to execute the computer program stored in the memory to cause the apparatus to perform the method according to any one of claims 1 to 8.

34. A communication apparatus, comprising:
a processor; and
a memory, having stored therein a computer program,
wherein the processor is configured to execute the computer program stored in the memory to cause the apparatus to perform the method according to any one of claims 9 to 16.

35. A communication apparatus, comprising:
a processor; and
an interface circuit, configured to receive a code instruction and transmit the code instruction to the processor;
wherein the processor is configured to run the code instruction to perform the method according to any one of claims 1 to 8.

36. A communication apparatus, comprising:
a processor; and
an interface circuit, configured to receive a code instruction and transmit the code instruction to the processor;
wherein the processor is configured to run the code instruction to perform the method according to any one of claims 9 to 16.

37. A computer-readable storage medium, having stored therein an instruction that, when executed, causes the method according to any one of claims 1 to 8 to be performed.

38. A computer-readable storage medium, having stored therein an instruction that, when executed, causes the method according to any one of claims 9 to 16 to be performed.
